# NEUE EUROPÄISCHE PATENTSCHRIFT

(11) **EP 2 110 928 B2**
(45) Veröffentlichungstag und Bekanntmachung des Hinweises auf die Entscheidung über den Einspruch: **01.06.2016**
(45) Hinweis auf die Patenterteilung: 16.01.2013
(21) Anmeldenummer: 08007691.2
(22) Anmeldetag: 19.04.2008
(51) Int. Cl.: H02K 5/128

(54) **Statorgehäusebaugruppe für einen Spaltrohrmotor**
Stator housing components for a canned motor
Composants du boîtier du stator pour un moteur à gaine

(43) Veröffentlichungstag der Anmeldung: 21.10.2009
(73) Patentinhaber: Grundfos Management A/S, 8850 Bjerringbro (DK)
(72) Erfinder: Mikkelsen, Steen, 8850 Bjerringbro (DK); Poulsen, Brian Lundsted, 8870 Langaa (DK)
(74) Vertreter: Hemmer, Arnd

(56) Entgegenhaltungen:
- EP-A- 0 374 612
- EP-A2- 0 357 913
- EP-A2- 0 963 029
- WO-A1-2007/023014
- DE-A1- 4 438 132
- DE-A1- 10 103 209
- DE-A1- 19 912 614
- DE-A1- 19 921 365
- DE-A1-102005 057 661
- FR-A- 2 533 976
- US-A1- 2003 160 527

## Beschreibung

Die Erfindung betrifft eine Statorgehäusebaugruppe für einen Spaltrohrmotor sowie insbesondere eine Pumpe mit einer derartigen Statorgehäusebaugruppe.

Pumpen mit Spaltrohrmotor gemäß dem Stand derTechnik weisen ein Pumpengehäuse auf, in welchem ein Laufrad ein Fluid vom Zu- und in den Ableitungsbereich treibt. Wie beispielsweise aus EP 0 374 612 A bekannt, wird das Laufrad von einem Rotor angetrieben, welcher nasslaufend in einem Spaltrohr gelagert ist. Dieses schließt den Rotorraum fluiddicht ab gegenüber einem umgebenden Statorgehäuse, in welchem ein Stator zur Drehung des Rotors untergebracht ist. Entsprechend weisen Pumpen mit einem Spaltrohrmotor eine Vielzahl von Einzelteilen auf, die zeit- und kostenaufwändig zu montieren sind.

Es ist Aufgabe der Erfindung, den Zeit- und Kostenaufwand für die Montage und Herstellung eines Spaltrohrmotors zu verringern.

Diese Aufgabe wird durch eine Statorgehäusebaugruppe mit den im Anspruch 1 angegebenen Merkmalen sowie durch eine Pumpe mit den im Anspruch 7 angegebenen Merkmalen gelöst. Bevorzugte Ausführungsformen ergeben sich aus den zugehörigen Unter-ansprüchen, der nachfolgenden Beschreibung und der Zeichnung.

Die erfindungsgemäße Statorgehäusebaugruppe für eine Pumpe mit einem nasslaufenden Elektromotor weist ein Statorgehäuse und ein Spaltrohr auf und ist als einteiliges Bauteil ausgestaltet. Dabei sind Statorgehäuse und Spaltrohr gemeinsam als einstückiges bzw. einteiliges Bauteil, vorzugsweise aus einem identischen Werkstoff, gebildet. In diesem Fall kann bereits bei der Herstellung der Pumpenkomponenten auf eine Reihe von Produktionsschritten, wie sie bei einer individuellen Anfertigung von Statorgehäuse und Spaltrohr anfallen, verzichtet werden, wodurch Produktionskosten und -zeit eingespart werden können. Bevorzugt sind Statorgehäuse und Spaltrohr an einer Stirnseite über eine Wand miteinander verbunden, die als senkrecht zur Rotorachse orientierter, diese umfänglich umgebender Kreisring ausgestaltet ist. Vorteilhafterweise kann das Spaltrohrdurch gemeinsame einteilige Herstellung mit dem Statorgehäuse und der beide verbindenden Stirnwand auf einfache Weise fluiddicht ausgebildet werden.

Gleichzeitig erlaubt ein solches einstückiges bzw. einteiliges Bauteil, welches Statorgehäuse und Spaltrohr beinhaltet, erhebliche Vereinfachungen bei der Montage. So müssen individuell als Statorgehäuse oder Spaltrohr vorliegende Pumpenkomponenten auch jeweils in einem eigenen Montageschritt montiert werden, was zeit- und kostenaufwändig ist. Dem gegenüber ist ein einteiliges Bauteil aus Spaltrohr und Statorgehäuse weniger aufwändig zu montieren, da die Anzahl der zu montierenden Pumpenkomponenten entsprechend um mindestens eins verringert ist. Ferner ist die Herstellung des einteiligen Bauteils in mehreren Schritten möglich.

Bevorzugt sind das Statorgehäuse und das Spaltrohr aus Kunststoff, vorzugsweise als Spritzgussteil gefertigt. Durch Spritzgießen lassen sich insbesondere komplexe Formen, wie sie bei einem einteiligen Bauteil aus Statorgehäuse und Spaltrohr vorliegen, unaufwändig und kostengünstig fertigen. Die Verwendung von Kunststoff bietet darüber hinaus den Vorteil, eine Farbgebung des einstückigen Bauteils bereits bei seiner Herstellung vornehmen zu können. Dies ist insbesondere für ein Stator gehäuse relevant, dessen Färbung auch bei einer montierten Pumpe von außen sichtbar bleiben soll. Es kann in diesem Fall auf eine nachfolgende Lackierung verzichtet werden. Dazu wird vorzugsweise ein entsprechend gefärbter Kunststoff verwendet.

Weiter bevorzugt sind das Statorgehäuse und das Spaltrohr aus einem Verbundwerkstoff, insbesondere Polyphenylensulfid (PPS) enthaltend, gefertigt. Beispielsweise kann der Verbundwerkstoff als faserverstärkter Kunststoff ausgeführt sein. PPS ist dabei für Pumpen mit einem Spaltrohrmotor besonders geeignet, da es sich um einen chemisch äußerst beständigen Kunststoff handelt. Zudem ist PPS hochtemperaturbeständig. Ferner bevorzugt ist zumindest das Spaltrohr mit Metall beschichtet, insbesondere bedampft. Auf diese Weise kann das Spaltrohr dicht, insbesondere diffusionsdicht, ausgelegt werden. Somit lässt sich eine derart ausgebildete Pumpe auch als Tauchpumpe einsetzen.

Zwischen Statorgehäuse und Spaltrohr ist ein Hohlraum ausgebildet, in welchem Streben zwischen Statorgehäuse und Spaltrohr angeordnet sind. Die Streben können unter anderem als balkenförmige oder flächige Strukturen ausgestaltet sein. Die Streben sind als sich im Wesentlichen radial erstreckende Rippen ausgebildet, welche Spaltrohr und Statorgehäuse miteinander verbinden. Zweckmäßigerweise sind die Streben so ausgestaltet, dass der zwischen Spaltrohr und Statorgehäuse gebildete Hohlraum zur Aufnahme des Stators nutzbar bleibt. Diese Streben nehmen Kräfte zwischen Statorgehäuse und Spaltrohr auf und können zur Verbindung von Statorgehäuse und Spaltrohr als einstückiges Bauteil beitragen. Insbesondere können sie selbst einstückig mit der übrigen Statorgehäusebaugruppe ausgebildet sein.

Insbesondere wird durch die Streben verhindert, dass das einteilige Bauteil aus Statorgehäuse und Spaltrohr bei Kräften, die auf das Spaltrohr und/oder das Statorgehäuse wirken, verformt wird oder bricht. Beispielsweise wirken auf das Spaltrohr Kräfte infolge des auf der Spaltrohrinnenfläche lastenden Drucks des zu pumpenden Fluids. Ferner können solche Kräfte von einem in dem Spaltrohr angeordneten Rotorlager herrühren. Der zwischen Statorgehäuse und Spaltrohr ausgebildete Hohlraum erlaubt es, wie an sich bekannt, den Stator zwischen Spaltrohr und Statorgehäuse anzuordnen. Mittels der Streben ist dazu die einteilige Einheit aus Statorgehäuse und Spaltrohr folglich sowohl hinreichend stabil als auch mit genügend großem Bauraum für den Stator ausgestaltet.

Ferner bevorzugt weist bei der Statorgehäusebaugruppe das Spaltrohr an einem Axialende eine Stirnfläche auf, in welcher ein sich vorzugsweise koaxial mit der Längsachse des Spaltrohres erstreckendes Durchgangsloch mit einem Innengewinde ausgebildet ist. Über dieses Durchgangsloch kann der Rotor im Bedarfsfall gedreht werden. Während des Normalbetriebes der Pumpe ist das Durchgangsloch verschlossen. Der Verschluss kann mit einer zu dem Innengewinde des Durchgangslochs passenden Schraube erfolgen, die das Spaltrohr, wie an sich bekannt, verschließt. Zweckmäßigerweise ist das Innengewinde bei einem durch Spritzgießen gefertigten einstückigen Bauteil durch Einlegen eines Gewindedorns in die Gießform gebildet. Der Gewindedorn lässt sich dabei nach dem Spritzgießen aus dem Spritzgussteil herausschrauben und gibt somit das Gewinde frei.

Vorteilhaft weist bei einer Statorgehäusebaugruppe das Statorgehäuse mindestens ein Eingriffselement zur formschlüssigen Verbindung mit einem Pumpengehäuse auf. Dabei beinhaltet die Statorgehäusebaugruppe nicht notwendigerweise eine einteilige Baueinheit aus Statorgehäuse und Spaltrohr wie sie vorangehend beschrieben wurde. Mit einer solchen formschlüssigen Verbindung wird eine zeitaufwändige Verschraubung des Statorgehäuses mit einem Pumpengehäuse vermieden. Die formschlüssige Verbindung des Statorgehäuses mit einem Pumpengehäuse über das oder die Eingriffselemente des Statorgehäuses kann demgegenüber in einem einzigen Prozessschritt ausgeführtwerden. Eine so gestaltete Statorgehäusebaugruppe trägt also vorteilhaft zur Einsparung von Montagekosten und -zeit bei. Das zumindest eine Eingriffselement des Statorgehäuses ist dabei vorzugsweise derart ausgestaltet, dass die formschlüssige Verbindung mit dem Pumpengehäuse lösbar ist. Damit kann eine solche Pumpe auch unaufwändig wieder geöffnet werden, wodurch zur Inspektion, Wartung oder Reparatur Zeit und Kosten eingespart werden können.

Die erfindungsgemäße Pumpe mit einem nasslaufenden Elektromotor weist eine Statorgehäusebaugruppe mit den oben beschriebenen Merkmalen auf. Eine solche Pumpe lässt sich, wie oben bereits zu den Vorzügen der Statorgehäusebaugruppe ausgeführt, mit deutlich verringertem Aufwand, verringerten Produktionskosten und kürzerer Montagezeit fertigen und montieren.

Vorzugsweise weistdie Pumpe ein Pumpengehäuse auf, wobei das Pumpengehäuse sowie das Statorgehäuse mit miteinander korrespondierenden Eingriffselementen versehen sind, welche formschlüssig miteinander in Eingriff sind, und so das Pumpengehäuse mit dem Statorgehäuse verbinden. Eine solche formschlüssige Verbindung von Pumpengehäuse und Statorgehäuse bedarf keiner zusätzlichen Verschraubung. Daher kann die Verbindung mit geringem Kosten- und Montageaufwand vorgenommen werden. Vorzugsweise weisen Pumpengehäuse und Statorgehäuse derartig ausgestaltete miteinander korrespondierende Eingriffselemente auf, welche Pumpengehäuse und Statorgehäuse formschlüssig und gleichzeitig lösbar miteinander verbinden. Auf diese Weise kann auch die Wartung oder die Reparatur einer solchen Pumpe mit deutlich verringertem Aufwand und entsprechend geringeren Kosten vorgenommen werden.

Ferner bevorzugt weist bei der Pumpe das Statorgehäuse ein dem Pumpengehäuse zugewandtes axiales Ende mit einer im Wesentlichen zylindermantelförmigen Außenumfangsfläche und das Pumpengehäuse ein dem Statorgehäuse zugewandtes Ende mit einer im Wesentlichen zylindrischen Innenumfangsfläche auf, wobei an diesen Außen-und Innenumfangsflächen die Eingriffselemente in radialer Richtung orientiert sind. Zweckmäßigerweise sind die Eingriffselemente innerhalb des Pumpengehäuses angeordnet. Auf diese Weise kann die Außenumfangsfläche des Pumpengehäuses entlang dieser Verbindung im Wesentlichen zylindrisch und unprofiliert ausgestaltet werden.

So können an der Außenumfangsfläche des Statorgehäuses radial auskragende Vorsprünge ausgebildet sein, welche in Ausnehmungen an der Innenumfangsfläche des Pumpegehäuses eingreifen, oder umgekehrt. Dabei hintergreifen die Vorsprünge vorzugsweise eine Anlageschulter, welcher eine Bewegung in axialer Richtung verhindert und Pumpen- und Statorgehäuse in dieser Richtung zusammenhält.

Bevorzugt bilden die Eingriffselemente eine Verbindung in Form eines Bajonettverschlusses. Dabei weist der Bajonettverschluss vorzugsweise ein Spann-, Feder- und/oder Verriegelungselement auf, durch welches Pumpengehäuse und Statorgehäuse in der Stellung der geschlossenen Verbindung kraftbeaufschlagt, verriegelt und/oder arretiert sind. Auf diese Weise kann eine Absicherung gegen unbeabsichtigtes Lösen von Pumpengehäuse und Statorgehäuse geschaffen werden. Bevorzugt weisen die radial orientierten Eingriffselemente an ihrer dem Statorgehäuse nahen Seite ein Flächenstück auf, welches mit zunehmendem radialen Abstand von der jeweiligen zylindrischen Umfangsfläche in Richtung des Statorgehäuses geneigt ist. Somit greifen die Eingriffselemente hakenartig ineinander. Die Eingriffselemente des Statorgehäuses weisen geeigneterweise im Wesentlichen die Form eines Prismas mit rechteckiger Grundfläche auf, wobei die dem Statorgehäuse zugewandte Seite des Prismas mit zunehmendem radialen Abstand von der zylindrischen Umfangsfläche in Richtung des Statorgehäuses geneigt ist.

Bevorzugt ist bei der Pumpe zwischen Statorgehäuse und Pumpengehäuse ein Dichtring angeordnet, vorzugsweise umfänglich um einen am Statorgehäuse angeordneten Dichtflansch. Bevorzugt bildet dieser Dichtflansch einen kreiszylindrischen Vorsprung am Statorgehäuse, welcher an derjenigen Seite des Statorgehäuses angeordnet ist, die mitdem Pumpengehäuse verbunden ist, und welcher die Rotorachse umfänglich umgibt. Der Dichtring ist dabei umfänglich um den Dichtflansch angeordnet, sodass das Pumpengehäuse über den gesamten Umfang des Dichtringes mit diesem zur Anlage kommt. Auf diese Weise wird der von Pumpengehäuse und Spaltrohr gebildete Innenraum der Pumpe, in dem sich Rotor und Laufrad bewegen, an der Verbindungsstelle von Pumpengehäuse und Statorgehäuse bzw. Spaltrohr abgedichtet, sodass kein Fluid aus der Pumpe austreten kann.

Vorzugsweise ist die Pumpe eine Heizungsumwälzpumpe.

Die Erfindung ist nachfolgend anhand eines in der Zeichnung dargestellten Ausführungsbeispiels näher erläutert Es zeigen:
- Fig. 1: eine Heizungsumwälzpumpe mit einer Statorgehäuse- baugruppe in einer perspektivischen Explosionsdarstellung,
- Fig. 2: einen Gießkern mit einem Gewindedorn zur Herstellung der Statorgehäusebaugruppe der Heizungsumwälzpumpe gemäß Fig. 1 in einer schematischen Darstellung im Schnitt,
- Fig. 3: die Statorgehäusebaugruppe gemäß Fig. 1 in einer Sei- tenansicht und in einer Ausschnittsvergrößerung,
- Fig. 4: die Statorgehäusebaugruppe gemäß Fig. 1 in einer Sei- tenansicht in einer Ausschnittsvergrößerung,
- Fig. 5: schematisch eine Verbindung von Statorgehäuse und Pumpengehäuse gemäß Fig. 1 im Schnitt in einer Explosi- onsdarstellung,
- Fig. 6: die Heizungsumwälzpumpe gemäß Fig. 1 mit einer form- schlüssigen Verbindung von Statorgehäuse und Pumpen- gehäuse in einer schematischen Darstellung im Schnitt und
- Fig. 7: Heizungsumvvälzpumpe gemäß Fig. 1 in einer perspektivi- sehen Explosionsdarstellung.

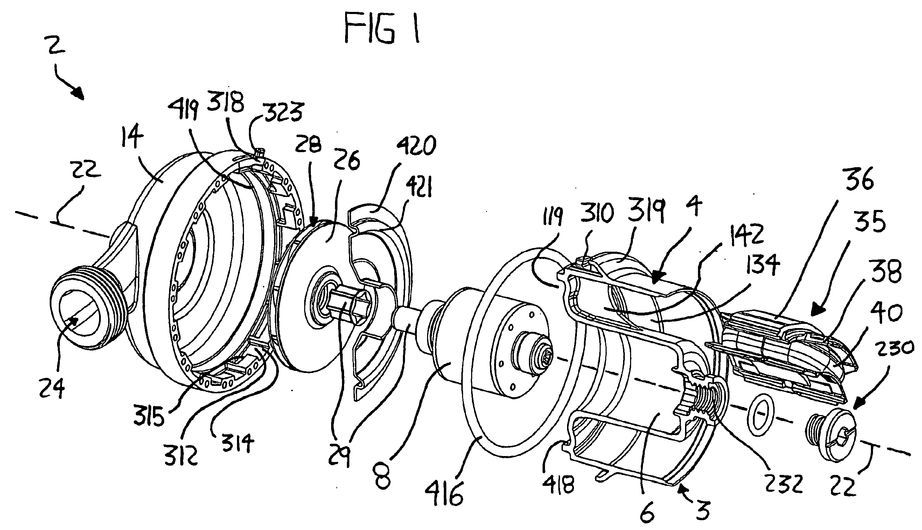

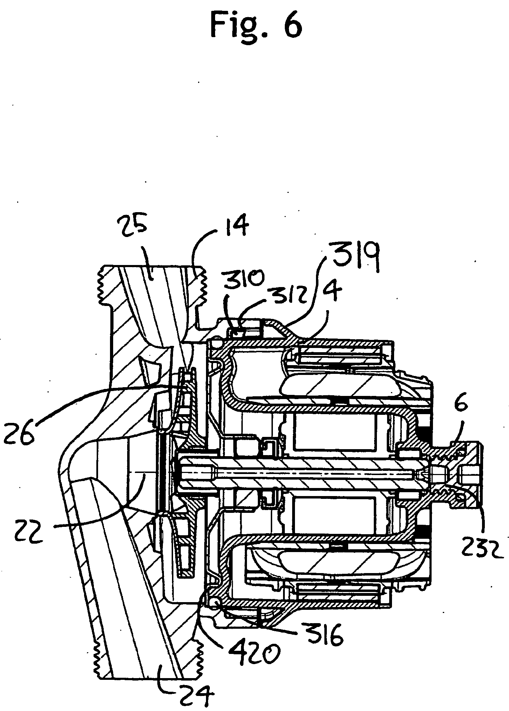

Die in Fig. 1, 6 und 7 dargestellte Heizungsumwälzpumpe 2 weist eine Statorgehäusebaugruppe 3 mit einem Statorgehäuse 4 und einem einteilig mit diesem ausgebildeten Spaltrohr 6 auf. Im Innenraum des Spaltrohrs 6 ist ein koaxial zum Spaltrohr orientierter Rotor 8 drehbar gelagert. Ein Pumpengehäuse 14 ist an derjenigen Seite der Statorgehäusebaugruppe 3 an das Statorgehäuse 4 angeordnet, zu welcher das Spaltrohr 6 an seinem axialen Ende geöffnet ist. Dabei ist das Pumpengehäuse 14 koaxial zur Rotorachse 22 orientiert Das Pumpengehäuse 14 weist an der Saugseite eine Zuleitung 24 und an der Druckseite eine Ableitung 25 für das zu pumpende Wasser auf. Das Wasser gelangt durch die Zuleitung 24 in einen zentralen Einlass (in der Abbildung nicht gezeigt) eines Laufrads 26, welches durch den Rotor 8 in Rotation versetzt wird. Das Laufrad 26 wird dazu über Verbindungselemente 29 vom Rotor 8 angetrieben. Der Rotor 8 seinerseits wird durch einen Stator 35 in Rotation versetzt, welcher aus einem Statorkern 36, Wicklungsträgern 38 und Wicklungen 40 besteht.

Die Statorgehäusebaugruppe 3 mit einem Statorgehäuse 4 und einem einteilig mit diesem ausgebildeten Spaltrohr 6 wird im Wesentlichen durch eine dem Pumpengehäuse 14 nahe Stirnfläche 119 der Statorgehäusebaugruppe, welche einstückig mit dem Spaltrohr 6 und dem Pumpengehäuse 14 ausgebildet ist, zusammengehalten. Die Stirnfläche 119 hat dabei im Wesentlichen die Gestalt eines senkrecht zur Rotorachse 22 orientierten und diese umfänglich umgebenden Kreisringes. Dessen Außenumfang grenzt dabei an das Statorgehäuse 4 an bzw. geht nahtlos in dieses über, während dessen Innenumfang an die Umfangsfläche des Spaltrohres 6 nahtlos anschließt. Dabei begrenzen das Spaltrohr 6 und das Statorgehäuse 4 einen Hohlraum 134, welcher das Spaltrohr 6 umfänglich umgibt. In diesem Hohlraum 134 befindet sich der Stator 35 zum Antrieb des Rotors 8. Um die Statorgehäusebaugruppe 3 bei auf das Spaltrohr 6 und/oder auf das Statorgehäuse 4 einwirkenden Kräften zu stabilisieren, sind Spaltrohr 6 und Statorgehäuse 4 über als radial orientierte Rippen ausgestaltete Streben 142 miteinander verbunden, welche somit die Umfangswände des Hohlraums 134 gegeneinander abstützen. Die einstückige Statorgehäusebaugruppe 3 istdurch Spritzgießen aus einem Verbundwerkstoff mit dem Kunststoff Polyphenylensulfid (PPS) gefertigt, welcher wegen seiner Temperaturbeständigkeit für den Einsatz in Heizungsumwälzpumpen besonders geeignet ist. Darüber hinaus enthält der Verbundwerkstoff Fasern, die den Kunststoff verstärken.

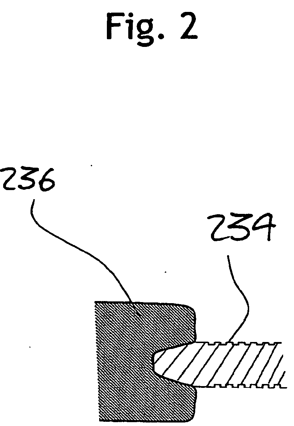

Das Spaltrohr 6 weist an einem vom Pumpengehäuse 14 entfernten Axialende eine Stirnfläche auf, in welcher eine Schraube 230 ein mit einem Innengewinde versehenes Durchgangsloch 232 verschließt. Das Durchgangsloch 232 ist dabei mit der Rotorachse 22 koaxial orientiert. Das Durchgangsloch 232 mit dem Innengewinde wird direkt im Spritzgussprozess zur Herstellung der einstückigen Baueinheit aus Statorgehäuse 4 und Spaltrohr 6 ausgebildet (Fig. 2). Dazu wird ein Gewindedorn 234 in einen Gießkern 236 für das Spaltrohr 6 eingelegt. Nach dem Erstarren des Spritzgussteils 6 wird der Gewindedorn 234 aus dem Spaltrohr 6 herausgeschraubt.

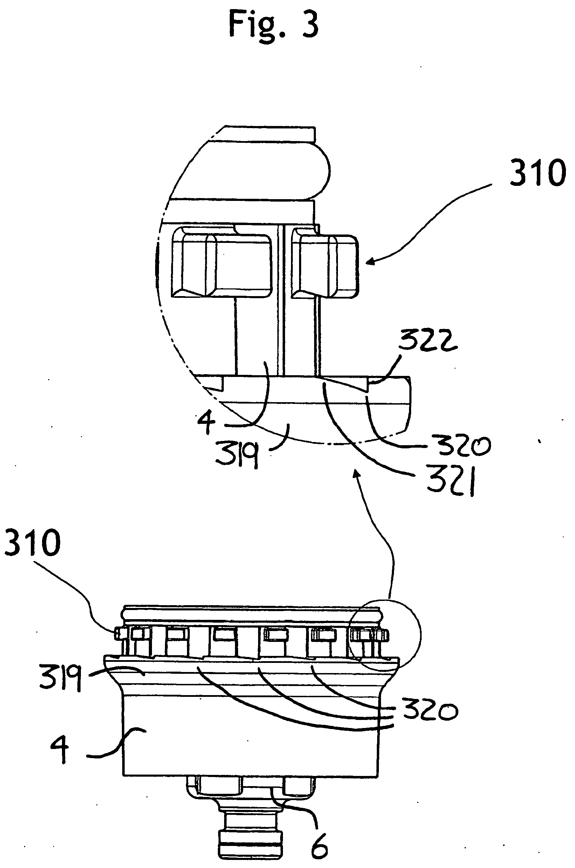

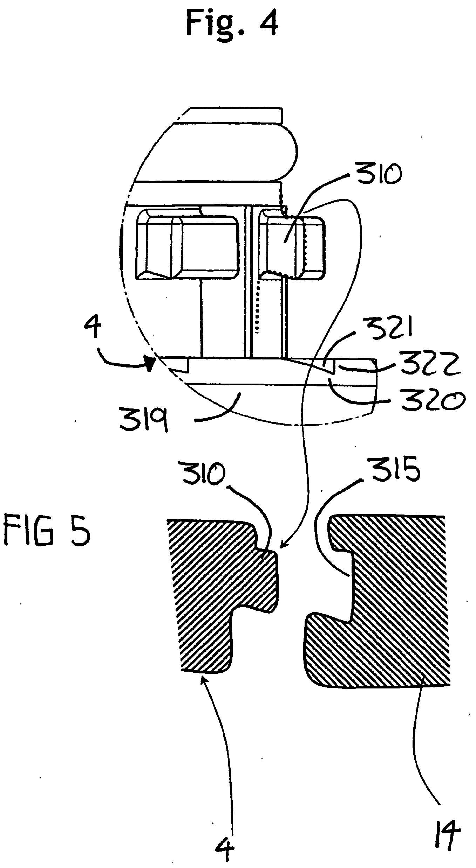

Das Statorgehäuse weist nahe seinem dem Pumpengehäuse 14 zugewandten axialen Ende Eingriffselemente 310 auf, die umfänglich um den Außenumfang des Statorgehäuses 4 verteilt sind. Diese Eingriffselemente 310 (siehe Fig. 1 und insbesondere auch Fig. 3 bis 7) weisen eine im Wesentlichen quaderförmige Gestalt auf und sind in radialer Richtung zur Rotorachse 22 orientiert. Passend dazu weist das Pumpengehäuse 14 entlang seiner Innenumfangsfläche Eingriffselemente in Form von Vertiefungen 312 auf, die mit den Eingriffselementen 310 des Statorgehäuses 4 derart korrespondieren, dass sie als Bajonettverschluss ineinandergreifen können. Dabei sind die Eingriffselemente 312 als im Wesentlichen L-förmige Ausnehmungen ausgebildet (Fig. 1). Dabei erstreckt sich jeweils ein erster Schenkel 314 der Ausnehmungen 312 in axialer Richtung bis zu dem dem Statorgehäuse zugewandten axialen Ende des Pumpengehäuses 14. Zu diesen ersten Schenkeln sind die zweiten Schenkel 315 der L-förmigen Ausnehmungen 312 jeweils senkrecht entlang der Innenumfangsfläche orientiert und an den vom Statorgehäuse 4 abgewandten Enden der axial orientierten Ausnehmungen 314 angeordnet. Diese umfänglich orientierten Schenkel 315 sind gerade so lang ausgeführt, dass die quaderförmigen Eingriffselemente des Statorgehäuses 4 den axial orientierten Bereich der Ausnehmungen durch Drehung des Statorgehäuses 4 um die Rotorachse 22 verlassen und mit den umfänglich orientierten Ausnehmungen 315 in Eingriff treten können. Der Verschluss von Statorgehäuse 4 und Pumpengehäuse 14 geschieht also dergestalt, dass das Statorgehäuse 4 axial in das Pumpengehäuse 14 eingeschoben wird und um die Rotorachse 22 gedreht wird, nachdem die Eingriffselemente 310 des Statorgehäuses 4 an die axialen Enden der Eingriffselemente 312 des Pumpengehäuses 14 anschlagen. Auf diese Weise hintergreifen die Eingriffselemente 310 des Statorgehäuses 4 axial die Eingriffselemente 312 des Pumpengehäuses 14. Somit sind Statorgehäuse 4 und Pumpengehäuse 14 formschlüssig miteinander verbunden. Die dem Statorgehäuse 4 nahen Seiten der radial orientierten Eingriffselemente 310, 315 sind mit zunehmendem radialen Abstand von der Rotorachse 22 in Richtung des Statorgehäuses 4 geneigt. Daher greifen die Eingriffselemente 310 des Statorgehäuses 4 ähnlich Widerhaken in die Eingriffselemente 312 des Pumpengehäuses 14 ein (Fig. 4 bis 6.).

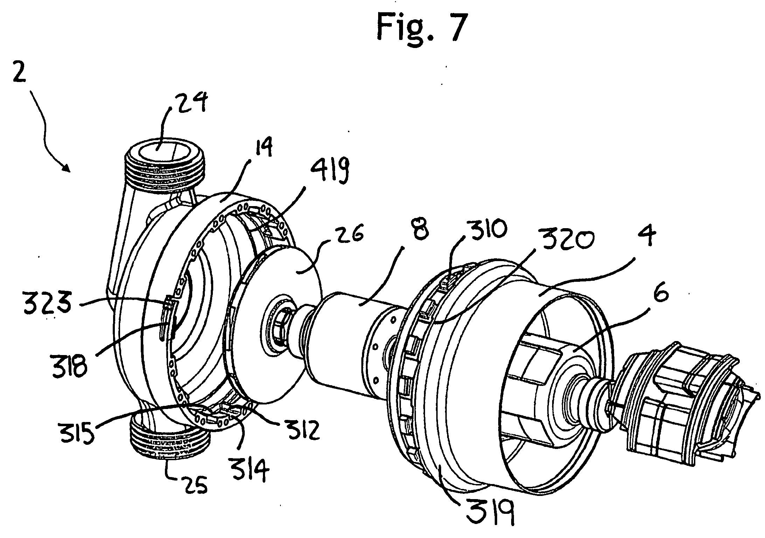

Zur drehfesten Arretierung des Statorgehäuses 4 relativ zum Pumpengehäuse 14 ist an der zylindrischen Umfangsfläche des Pumpengehäuses 14 an seinem dem Statorgehäuse 4 zugewandten Ende in der Umfangswandung elastisch eine Zunge 318 ausgebildet (Fig. 7).

Diese Zunge 318 fungiert dabei als Rastelement, welches zum Einrasten in eine Verzahnung des Statorgehäuses 4 ausgebildet ist. Das freie Ende der Zunge 318 ist dazu geringfügig auf das Statorgehäuse 4 zugebogen, so dass es in axialer Richtung über das axiale Ende des Pumpengehäuses 14 vorsteht. Die Verzahnung befindet sich umfänglich an einem Kragen 319, welche an jenem axialen Ende des Statorgehäuses 4 angeordnet ist, das dem Pumengehäuse 14 zugewandt ist. Der Kragen 319 steht in radialer Richtung über die Umfangswandung des Statorgehäuses 4 vor, wobei er an seinem Außenumfang mit dem Außenumfang des Pumpengehäuses 14 im Wesentlichen bündig abschließt. Die Verzahnung ist an der axialen Stirnseite des Kragens 319 aus einer Vielzahl von Kerben 320 gebildet und erstreckt sich über den gesamten Umfang des Kragens 319. Die Kerben 320 sind derart angeordnet, dass sich zu jeder L-förmigen Vertiefung 312 eine Kerbe 320 an derselben umfänglichen Position befindet. Die Kerben 320 bilden die Verzahnung in Gestalt eines Sägezahnprofils aus. Dieses Sägezahnprofil weist entsprechend zwei Flanken 321, 322 mit stark unterschiedlicher axialer Steigung auf. Über die unterschiedliche Flankensteigung begrenzt die Zunge 318 zunächst die Drehbarkeit des Statorgehäuses 4 auf eine Drehrichtung.

Dazu wirken Zunge 318 und Verzahnung ähnlich dem Verschluss eines Kabelbinders zusammen. Dabei ist jede zweite Flanke 321 nahezu parallel zur Längsachse der Zunge 318, d. h. im spitzen Winkel zur Umfangsrichtung bezogen auf die Längsachse 22 des Rotors 8, orientiert, die dazwischenliegenden Flanken 322 hingegen weisen nahezu axiale Ausrichtungen auf. Daher kann die Zunge 318, wenn sie auf einer zu ihrer Längsachse parallelen Flanke 321 aufliegt, leicht an dieser entlang schleifen, wenn die axial orientierte, der Zunge 318zugewandte Flanke 322 vom freien Ende der Zunge 318durch Drehung des Statorgehäuses 4wegbewegt wird. In dieser Drehrichtung wird die Zunge 318 lediglich elastisch in Richtung des Pumpengehäuses 14 verformt. Nachdem die axialen Flanken 322 der Verzahnung die Zunge 318 passiert haben, kann sich die Zunge 318 wieder entspannen und an der nächsten zu ihrer Längsachse parallelen Flanke 321 zur Anlage kommen. Daher tritt bei dieser Drehrichtung keinerlei formschlüssige Hemmung auf. Wird die Drehrichtung jedoch umgekehrt, so kommt das freie Ende der Zunge 318 mit einer benachbarten und der Zunge 318 zugewandten axialen Flanke 322 zur Anlage, sodass die Drehbewegung formschlüssig gehemmt wird.

Somit ist das Statorgehäuse 4 an einer Drehung in zumindest eine Richtung gehindert. Das Statorgehäuse 4 ist allerdings ebenfalls beim Anschlag der profilierten Eingriffselemente 310 an die Enden der umfänglich orientierten Schenkel 315 der L-förmigen Ausnehmungen 312 an einer Drehung in eine Richtung gehindert. Damit weist die Vorrichtung zwei Beschränkungen der Drehrichtungen auf. Zur drehfesten Arretierung des Statorgehäuses 4 sind diese derart kombiniert, dass sie eine Drehung in entgegengesetzten Richtungen beschränken, sodass eine Drehung des Statorgehäuses 4 in keiner Richtung möglich ist. Dies ist so bewerkstelligt, dass das freie Ende der Zunge 318 in dieselbe Richtung weist, wie die umfänglich orientierten Schenkel 315 der L-förmigen Ausnehmung 312. Damit wirken die Zunge 318 und die Kerben 320 als Verriegelungselement für die Arretierung des Drehwinkels des Statorgehäuses 4 zusammen.

Die drehfeste Arretierung des Statorgehäuses 4 mittels der Zunge 318 ist darüber hinaus lösbar. Zu diesem Zweck ist an der Spitze der Zunge 318 eine Handhabe 323 angeordnet, mittels welcher die Zunge 318 in axialer Richtung vom Statorgehäuse 4 weg gebogen werden kann. Somit kann die Zunge 318 mit den Kerben 320 außer Eingriff treten, sodass eine Drehung des Statorgehäuses 4 zum Lösen der Eingriffselemente 310, 312 von Pumpengehäuse 14 und Statorgehäuse 4 möglich ist.

Die Fluiddichtheit der Verbindung von Statorgehäuse 4 und Pumpengehäuse 14 wird durch einen Dichtring 416 bewerkstelligt. Dieser Dichtring 416 ist vollumfänglich um die Rotorachse 22 und an der dem Pumpengehäuse zugewandten Stirnfläche 119 der Statorgehäusebaugruppe 3 angeordnet Dazu befindet sich umfänglich um die Rotorachse 22 an der Stirnfläche 119 ein kreiszylindrischer Dichtflansch 418, um welchen der Dichtring 416 kreisförmig angeordnet ist. An der Innenumfangsfläche des Pumpengehäuses 14 andererseits befindet sich eine umfänglich orientierte Drehfläche 419, an welcher der Dichtring 416 zur Anlage kommen kann. Damit dichtet der Dichtring 416 das Pumpengehäuse 14 und das Statorgehäuse 4, indem der Dichtring 416 entlang seines Innenumfangs am Dichtflansch 418 des Statorgehäuses 14 anliegt, und mit seinem Außenumfang mitder Dichtfläche 419 in Anlage ist Darüber hinaus liegt der Dichtring 416 auch an einem Lagerträger 420 an, in welchem der Rotor 8 und das Laufrad 26 stabil und drehbar angeordnet sind. Der Lagerträger 420 ist im Wesentlichen als senkrecht zur Rotorachse 22 orientierte kreisförmige Scheibe ausgestaltet, welche einen Vorsprung 421 in Form eines umfänglich die Rotorachse 22 umgebende Kreisrings zur Einpassung in die Stirnfläche 119 des Statorgehäuses 4 aufweist. Dabei liegt der Dichtring 416 in axialer Richtung zwischen dem Lagerträger 420 und dem Statorgehäuse 4.

### Bezugszeichenliste

- 2: - Heizungsumwälzpumpe
- 3: - Statorgehäusebaugruppe
- 4: - Statorgehäuse
- 6: - Spaltrohr
- 8: - Rotor
- 14: - Pumpengehäuse
- 22: - Rotorachse
- 24: - Zuleitung
- 25: - Ableitung
- 26: - Laufrad
- 28: - Durchlass
- 29: - Verbindungselemente
- 35: - Stator
- 36: - Statorkern
- 38: - Plastikbeschichtung
- 40: - Wicklungen
- 119: - Stirnfläche der Statorgehäusebaugruppe
- 134: - Hohlraum
- 142: - Streben
- 230: - Schraube
- 232: - Durchgangsloch mit Innengewinde
- 234: - Gewindedorn
- 236: - Gießkern
- 310: - Eingriffselemente (Statorgehäuse)
- 312: - L-förmige Ausnehmungen als Eingriffselemente (Pumpengehäuse)
- 314, 315: - Schenkel einer L-förmigen Ausnehmung
- 318: - Zunge
- 319: - Kragen
- 320: - Kerbe
- 321: - umfänglich orientierte Flanken
- 322: - axial orientierte Flanken
- 323: - Handhabe Zunge
- 416: - Dichtring
- 418: - Dichtflansch
- 419: - Ausnehmung
- 420: - Lagerträger
- 421: - Vorsprung

## Patentansprüche

1. Statorgehäusebaugruppe (3) für eine Pumpe (2) mit einem nasslaufenden Elektromotor (8) mit
einem Statorgehäuse (4) und einem Spaltrohr (6), wobei das Statorgehäuse (4) und das Spaltrohr (6) als ein einteiliges Bauteil ausgestaltet sind, **dadurch gekennzeichnet, dass**
zwischen Statorgehäuse (4) und Spaltrohr (6) ein Hohlraum (134) ausgebildet ist, in welchem Streben (142) zwischen Statorgehäuse (4) und Spaltrohr (6) angeordnet sind, wobei die Streben (142) als sich radial erstreckende Rippen ausgebildet sind, welche das Spaltrohr (6) und das Statorgehäuse (4) miteinander verbinden.

2. Statorgehäusebaugruppe (3) nach Anspruch 1,
**dadurch gekennzeichnet, dass**
das Statorgehäuse (4) und das Spaltrohr (6) aus Kunststoff, vorzugsweise als Spritzgussteil gefertigt sind.

3. Statorgehäusebaugruppe (3) nach einem der vorangehenden Ansprüche, **dadurch gekennzeichnet, dass**
das Statorgehäuse (4) und das Spaltrohr (6) aus einem Verbundwerkstoff, insbesondere Polyphenylensulfid (PPS) enthaltend, gefertigt sind.

4. Statorgehäusebaugruppe (3) nach einem der vorangehenden Ansprüche, **dadurch gekennzeichnet, dass**
das Spaltrohr (6) an einem Axialende eine Stirnfläche aufweist, in welcher ein vorzugsweise sich koaxial mit der Längsachse des Spaltrohres erstreckendes Durchgangsloch (232) mit einem Innengewinde ausgebildet ist.

5. Statorgehäusebaugruppe (3) insbesondere nach einem der vorangehenden Ansprüche,
**dadurch gekennzeichnet, dass**
das Statorgehäuse (4) mindestens ein Eingriffselement (310) zur formschlüssigen Verbindung mit einem Pumpengehäuse (14) aufweist.

6. Pumpe (2) mit einem nasslaufenden Elektromotor (8),
**dadurch gekennzeichnet, dass**
sie eine Statorgehäusebaugruppe (3) nach einem der vorangehenden Ansprüche aufweist.

7. Pumpe (2) nach Anspruch 7, **dadurch gekennzeichnet, dass**
die Pumpe (2) ein Pumpengehäuse (14) aufweist und das Pumpengehäuse (14) sowie das Statorgehäuse (4) mit miteinander korrespondierenden Eingriffselementen (310, 312) versehen sind, welche formschlüssig miteinander in Eingriff sind und so das Pumpengehäuse (14) mit dem Statorgehäuse (4) verbinden.

8. Pumpe (2) nach Anspruch 7, **dadurch gekennzeichnet, dass**
das Statorgehäuse (4) ein dem Pumpengehäuse (14) zugewandtes axiales Ende mit einer im Wesentlichen zylindermantelförmigen Außenumfangsfläche und das Pumpengehäuse (14) ein dem Statorgehäuse (4) zugewandtes Ende mit einer im Wesentlichen zylindermantelförmige Innenumfangsfläche aufweist, und an diesen Außen- und Innenumfangsflächen die Eingriffselemente (310, 312) in radialer Richtung orientiert sind.

9. Pumpe (2) nach Anspruch 7 oder 8,
**dadurch gekennzeichnet, dass**
die Eingriffselemente (310, 312) eine Verbindung in Form eines Bajonett-Verschlusses bilden.

10. Pumpe (2) nach einem der Ansprüche 7 bis 9,
**dadurch gekennzeichnet, dass**
die radial orientierten Eingriffselemente (310, 312) an ihrer dem Statorgehäuse (4) nahen Seite ein Flächenstück aufweisen, welches mit zunehmendem radialen Abstand in Richtung des Statorgehäuses (4) geneigt ist.

11. Pumpe (2) nach einem der Ansprüche 7 bis 10,
**dadurch gekennzeichnet, dass**
zwischen Statorgehäuse (4) und Pumpengehäuse (14) ein Dichtring (316) angeordnet ist, vorzugsweise umfänglich um einen am Statorgehäuse (4) angeordneten Dichtflansch (318).

12. Pumpe (2) nach einem der Ansprüche 7 bis 11,
**dadurch gekennzeichnet, dass**
die Pumpe (2) eine Heizungsumwälzpumpe (2) ist.

## Claims

1. A stator housing subassembly (3) for a pump (2) with a wet-running electric motor (8) with
a stator housing (4) and a can (6), wherein
the stator housing (4) and the can (6) are designed as a single-part component, **characterised in that** a cavity (134) is formed between the stator housing (4) and the can (6), in which cavity struts (142) are arranged between the stator housing (4) and the can (6), wherein the struts (142) are designed as radially extending ribs which connect the can (6) and the stator housing (4) to one another.

2. A stator housing subassembly (3) according to claim 1, **characterised in that** the stator housing (4) and the can (6) are manufactured of plastic, preferably as an injection moulded part.

3. A stator housing subassembly (3) according to one of the preceding claims, **characterised in that** the stator housing (4) and the can (6) are manufactured of a composite material, in particular containing polyphenylene sulphide (PPS).

4. A stator housing subassembly (3) according to one of the preceding claims, **characterised in that** the can (6) at an axial end comprises an end-face, in which a through-hole (232) with an inner thread and preferably extending coaxially with the longitudinal axis of the can, is formed.

5. A stator housing subassembly (3) according to one of the preceding claims, **characterised in that** the stator housing (4) comprises at least one engagement element (310) for the positive connection to a pump casing (14).

6. A pump (2) with a wet-running electric motor (8), **characterised in that** it comprises a stator housing subassembly (3) according to one of the preceding claims.

7. A pump (2) according to claim 7, **characterised in that** the pump (2) comprises a pump casing (14), and the pump casing (14) as well as the stator housing (4) are provided with engagement elements (310, 312) which correspond to one another and which are engaged with one another with a positive fit and thus connect the pump casing (14) to the stator housing (4).

8. A pump (2) according to claim 7, **characterised in that** the stator housing (4) comprises an axial end which faces the pump casing (14) and which is with an essentially cylinder-surface-shaped outer peripheral surface, and the pump casing (14) comprises an end which faces the stator housing (4) and is with an essentially cylinder-surface-shaped inner peripheral surface, and the engagement elements (310, 312) are orientated in the radial direction on these outer and inner peripheral surfaces.

9. A pump (2) according to claim 7 or 8, **characterised in that** the engagement elements (310, 312) form a connection in the form of a bayonet closure.

10. A pump (2) according to one of the claims 7 to 9, **characterised in that** the radially orientated engagement elements (310, 312) comprise a surface piece on their side which is close to the stator housing (4), said surface piece being inclined in the direction of the stator housing (4) with an increasing radial distance.

11. A pump (2) according to one of the claims 7 to 10, **characterised in that** a sealing ring (316) is arranged between the stator housing (4) and the pump casing (14), preferably peripherally around a sealing flange (318) arranged on the stator housing (4).

12. A pump (2) according to one of the claims 7 to 11, **characterised in that** the pump (2) is a heating circulation pump (2).

## Revendications

1. Ensemble carter de stator (3) pour une pompe (2) équipée d'un moteur électrique (8) du type humide, qui comprend un carter de stator (4) et une gaine (6), le carter de stator (4) et la gaine (6) constituant un élément d'une seule pièce, **caractérisé en ce qu'**une cavité (134) est ménagée entre le carter de stator (4) et la gaine (6), dans laquelle sont disposées des entretoises (142) entre carter de stator (4) et gaine (6), lesdites entretoises (142) étant conçues sous forme de nervures s'étendant radialement et qui relient entre eux le carter de stator (4) et la gaine (6).

2. Ensemble carter de stator (3) selon la revendication 1, **caractérisé en ce que** le carter de stator (4) et la gaine (6) sont fabriqués en matière plastique, de préférence sous la forme d'une pièce moulée par injection.

3. Ensemble carter de stator (3) selon l'une des revendications précédentes, **caractérisé en ce que** le carter de stator (4) et la gaine (6) sont fabriqués à partir d'une matière composite, contenant en particulier du sulfure de polyphénylène (PPS).

4. Ensemble carter de stator (3) selon l'une des revendications précédentes, **caractérisé en ce que** la gaine (6) présente à une extrémité axiale une surface frontale dans laquelle est formé un trou de passage (232) muni d'un filetage intérieur et qui s'étend de préférence coaxialement à l'axe longitudinal de la gaine.

5. Ensemble carter de stator (3), en particulier selon l'une des revendications précédentes, **caractérisé en ce que** le carter de stator (4) présente au moins un élément de prise (310) servant à établir une liaison mécanique avec un carter de pompe (14).

6. Pompe (2) équipée d'un moteur électrique du type humide (8), **caractérisée en ce qu'**elle présente un ensemble carter de stator (3) selon l'une des revendications précédentes.

7. Pompe (2) selon la revendication 7, **caractérisée en ce que** la pompe (2) présente un carter de pompe (14) et **en ce que** le carter de pompe (14) ainsi que le carter de stator (4) sont munis d'éléments de prise (310, 312) qui se correspondent, qui sont en prise entre eux en formant une liaison mécanique et qui, par ce moyen, relient le carter de pompe (14) au carter de stator (4).

8. Pompe (2) selon la revendication 7, **caractérisée en ce que** le carter de stator (4) présente une extrémité axiale dirigée vers le carter de pompe (14) et présentant une surface périphérique extérieure sensiblement en forme de corps cylindrique et **en ce que** le carter de pompe (14) présente une extrémité dirigée vers le carter de stator (4) et présentant une surface périphérique intérieure sensiblement en forme de corps cylindrique et **en ce que**, sur ces surfaces périphériques extérieure et intérieure, les éléments de prise (310, 312) sont orientés dans une direction radiale.

9. Pompe (2) selon la revendication 7 ou 8, **caractérisée en ce que** les éléments de prise (310, 312) forment un assemblage de type fermeture à baïonnette.

10. Pompe (2) selon l'une des revendications 7 à 9, **caractérisée en ce que** les éléments de prise (310, 312) orientés radialement présentent, sur leur côté proche du carter de stator (4), une partie de paroi qui est inclinée en direction du carter de stator (4) avec un écartement radial croissant.

11. Pompe (2) selon l'une des revendications 7 à 10, **caractérisée en ce qu'**une bague d'étanchéité (316) est disposée entre le carter de stator (4) et le carter de pompe (14), de préférence circonférentiellement autour d'une bride d'étanchéité (318) disposée sur le carter de stator (4).

12. Pompe (2) selon l'une des revendications 7 à 11, **caractérisée en ce que** la pompe (2) est une pompe de circulation de chauffage (2).
